# EUROPEAN PATENT APPLICATION

(11) **EP 1 965 556 A1**
(43) Date of publication of application: **03.09.2008**
(21) Application number: 07004377.3
(22) Date of filing: 02.03.2007
(51) Int. Cl.: H04L 29/06

(54) **Method and network node for providing seamless handover support for a mobile host**

(71) Applicant: Siemens Networks GmbH & Co. KG, 81541 München (DE)
(72) Inventor: Eisl, Jochen, 85748 Garching (DE); Lott, Matthias, 82152 Planegg (DE)
(74) Representative: Maier, Daniel Oliver

(57) **Abstract**

Described is a method for providing seamless handover support for a mobile host (MH) in a communication network wherein the communication between the mobile host (MH) and a peer node (CN) is based on a Host Identity Protocol (HIP) connection. An original connection between the mobile host (MH) and the peer node (CN) is established via a first attachment node (PoA1) to which a first care-of-address (CoAl) is assigned. Thereby, at least one security association (SA) is used. The mobile host (MH) indicates the peer node (CN) to use a further node (MB) having an identifier being different from an identifier of the mobile host (MH) for the at least one security association (SA) within a connection between the mobile host (MH) and the peer node (CN). A temporary connection between the mobile host (MH) and the peer node (CN) via the further node (MB) is established. The further node (MB) is informed about the first and a second care-of-address (CoA1, CoA2) which is assigned to a second attachment node (PoA2) and has been detected by the mobile host (MH), wherein the mobile host is still connected to the first care-of-address (CoA1). Data from the peer node (CN) to the further node (MB) is sent which passes the data via the first and the second attachment nodes (PoA1, PoA2) to the mobile host (MH). A communication between the mobile host (MH) and the peer node (CN) is based on a HIP connection via the second attachment node (PoA2).

## Description

The invention relates to a method for providing seamless handover support for a mobile host in a communication network wherein a communication between the mobile host and a peer node is based on a host identity protocol (HIP) connection and wherein an original connection between the mobile host and the peer node is established via a first attachment node to which a first care-of-address (CoA) is assigned, thereby using at least one security association. The invention further relates to a network node for providing seamless handover support for a mobile host in a communication network.

Cellular communication systems of today have been designed as systems, which are optimized to mobility support. They do provide access to the internet. Mobility support for the internet architecture was retrofitted later, resulting in a patchwork of solutions at different layers of the system. For end-to-end mobility between communication peers (also called peer nodes) protocols have been specified, e.g. mobile IP (MIP), session initiation protocol (SIP) or extensions to transport layer protocols, such as stream control transmission protocol (SCTP) or transport control protocol (TCP). Since future heterogeneous networks will rely on IP-based data transfer, these different IP-based solutions have been developed to support host-mobility within and across different technologies.

It would be desirable to maintain a session between a mobile host and a corresponding peer node while the mobile host is moving from one destination to another, thereby maybe changing both its IP-address in the communication network and possibly the technology used to connect to the communication network.

In the host identity protocol (HIP) there is a separation between the identifier of the mobile host and its current location. The current location is destined through a point of attachment (PoA), called attachment node, which in many cases is associated with the care-of-address (CoA) of the mobile host. The benefit is that a non-changing identifier can be represented to higher layers because the host identity is similar to a usual IP address which can be processed by higher layers. The host identifier is cryptographic in its nature. It is the public key of an asymmetric key-pair. The HIP payload header can be carried in every IP datagram. However, since HIP headers are relatively large it is desirable to compress the HIP header so that the HIP header only occurs in control packets.

Based on currently proposed HIP specifications, when a new care-of-address is allocated to the mobile host the old care-of-address is not valid any longer. Therefore, the IP layer informs HIP about the address change. As a consequence, the mobile host sends a specific UPDATE message with the new care-of-address to the peer node. The peer host receives the UPDATE message and validates it and updates any local bindings between the HIP association and the mobile host's destination address. The peer node has to perform an address verification. This means, a peer node needs to check that the announced address is valid after it has been obtained by the mobile host. During the whole process of exchanging this information the HIP connection between the mobile host and the peer node is interrupted for the non-multi-homing case, except if there are no other addresses that can be used at the same time.

HIP is a protocol which builds on security associations within a HIP connection in order to enforce a secured transfer of data and control information between the peers, i.e. the mobile host and the peer node. A break of connection during a handover would even take longer, since the peer node has to change new key pairs, i.e. initiating re-keying for a session.

Seamless handover is defined in a way that from a point of view of the user the event of mobility and especially the event of a handover can't be noticed. When executing applications that are time sensitive, e.g. voice over IP, or packet loss sensitive, e.g. bulk transfer, without secured transport connection, and rely on the end-to-end handover protocol to re-attach to the network in a seamless way, seamless handover is necessary.

Currently, seamless handover is not possible for the host identity protocol, as specified in the current draft specification.

It is therefore an object of the current invention to provide a method for seamless handover in combination with the host identity protocol. It is a further object of the present invention to provide a network node allowing seamless handover.

In a method for providing seamless handover support for a mobile host according to the invention in a communication network wherein a communication between the mobile host and a peer node is based on a host identity protocol (HIP) connection and wherein an original connection between the mobile host and the peer node is established via a first attachment node to which a first care-of-address is assigned, thereby using at least one security association: the mobile host indicates the peer node to use a further node having an identifier being different from an identifier of the mobile host for the at least one security association within a connection between the mobile host and the peer node; a temporary connection between the mobile host and the peer node via the further node is established; the further node is informed about the first and a second care-of-address which is assigned to a second attachment node and has been detected by the mobile host, wherein the mobile host is still connected to the first care-of-address; data from the peer node to the further node is sent which passes the data via the first and the second attachment nodes to the mobile host; and communication between the mobile host and the peer node is based on a HIP connection via the second attachment node.

The further node being necessary for the temporary connection between the mobile host and the peer node is able to communicate based on a HIP connection and is, for example, represented by a peer node of the communication network. The step of establishing the temporary connection is, for instance, carried out when the mobile host changes its location and detects a new attachment node (which also is called point of attachment within this specification) when changing its location which requires a change of an assigned car-of-address. Sending of data to the first and second attachment nodes by the further node is called bi-casting.

A network node for providing seamless handover support for a mobile host in a communication network wherein a communication between the mobile host and a peer node is based on a host identity protocol (HIP) connection and wherein an original connection between the mobile host and the peer node is established via a first attachment node to which a first care-of-address is assigned, thereby using at least one security association, comprises an identifier being different from an identifier of the mobile host and is able to pass data received from the peer node and being destined for the mobile host via the first and second attachment nodes to the mobile host.

For providing seamless handover support in the host identity protocol, it is proposed to introduce a further node being able to bi-cast data received by a peer node to always have an active connection between the peer node and the mobile host during handover and address verification. The method described has the advantage that seamless handover is applicable for the HIP protocol which is an alternative to mobile IP for global mobility. A combined seamless handover and necessary security checks are based on the same trust level between the peer nodes. Therefore maintenance of security is achieved. Last, the proposal limits necessary extension for peer node implementation. Actually, the mobile host and the peer node just need to agree using a third party node (the further node) temporarily and encapsulate the host identity tag from the original connection following some specified syntax. The full complexity of the operation is handled by the further node being capable of using HIP.

Furthermore, the invention has the advantage of backward compatibility. Extensions are required for HIP implementations to enable seamless handover of an existing HIP connection, both in the mobile host and the peer node. However, if the peer node does not support seamless handover operation both nodes can operate using the standard HIP operation node as specified in the IETF specification.

According to a further embodiment the step of establishing the temporary connection between the mobile host and the peer node comprises the steps of setting up the HIP connection between the mobile host and the further node; and setting up a HIP connection between the further node and the peer node. Setting up the HIP connection between the mobile host and the further node may be done by the mobile host itself. Setting up the HIP connection between the further node and the peer node may be initiated by the further node.

According to a further embodiment the further node is using different security associations when bi-casting inbound packets to different attachment nodes with different care-of-addresses. Thereby, different attachment nodes in the communication network with different care-of-addresses can be specified.

According to a further embodiment an identifier (host identifier tag) of the mobile host is encoded by the peer node in data being destined for the mobile host and the further node accepts data received from the peer node which is destined for the mobile host. The further node may decode the identifier (host identifier tag) of the mobile host, received from the peer node to determine whether the data are destined for the mobile host or not.

According to a further embodiment of the invention the further node may accept preliminary usage of the second care-of-address as a recipient of data even if the second care-of-address has not been verified yet. The verification procedure for the second care-of-address is postponed until completion of handover. By postponing the verification of the second care-of-address it is possible to provide a seamless handover process within HIP.

The preliminary usage of the second care-of-address may be accepted based on the security association of the first care-of-address. Alternatively or additionally, the preliminary usage of the second care-of-address is accepted for a predetermined time period. The preliminary usage of the second care-of-address is accepted for a predetermined amount of data which can be sent towards a second care-of-address before address verification is applied.

According to a further embodiment the further node acknowledges the usage of the second care-of-address, especially for restricted usage. The further node further may update the suggested criteria and/or values for the restriction.

According to a further embodiment the further node changes its locator state from preliminary to active after having completed handover, thereby the second care-of-address becoming active. As will be described later, the invention proposes to extend the locator state machine within the further node to "PRELIMINARY". In the existing specification of HIP the states "UNVERIFIED", "ACTIVE", "DEPRECATED" have been already proposed within the specification.

According to a further embodiment a triggering message towards the peer node may be created to cause it to switch over from the original connection to a temporary connection and to activate bi-casting of the further node. After having received this triggering message the peer node starts sending data to the further node instead of sending these data directly to the mobile host via the first attachment node. Furthermore, the triggering message is causing the further node to bi-cast the data received from the peer node. Consequently, the former sole HIP connection between the peer node and the mobile host is split into two logical HIP connections, one between the peer node and the further node and one between the further node and the mobile host.

According to a further embodiment the original connection may be released after switching over to the temporary connections or after having completed handover. This is, because after having started the handover process the former HIP connection between the peer node and the mobile host is not any longer necessary. Informing the peer node to switch over to a direct connection is used to release HIP connection between the peer node and the further node.

The mobile host may perform the steps of sending an attachment node UPDATE message to the peer node with the second care-of-address as a new attachment node (the second attachment node) to the peer node when handover is completed. Furthermore, the mobile host performs the steps of informing the peer node to switch over to a direct connection between the peer node and the mobile host via the second attachment node when handover is completed. Additionally, the peer node may perform the steps of performing an address verification of the second attachment node when handover is completed. More precisely, after address verification has been done by the peer node, the switch over to the direct HIP connection between the peer node and the mobile host via the second attachment node is completed. Consecutively, the mobile host may wish to keep the HIP connection with the further node for later seamless handover procedures or terminate the connection.

According to a further embodiment the peer node and/or the mobile host and/or the attachment nodes can recognize whether they support HIP operations for seamless handover.

According to a further embodiment an application on a mobile host informs a peer node about the need for seamless handover. Thereby, the needs for different applications may be distinguished. Bi-casting mechanisms may only be triggered for specific security associations. The assumption is that an application programming interface (API) is used to tell a so called HIP module in the peer nodes about least requirements.

According to a further embodiment of the invention the mobile host can obtain the second care-of-address in advance even if a new link layer, as defined by the ISO/OSI reference model, is not yet fully established. According to this feature it is possible to provide handover in a communication network.

With these and other advantages and features that will become here and after apparent, further information may be obtained by reference to the following detailed description and appending claims, and to the figures attached hereto.

An embodiment is illustrated in the accompanying figures, in which like reference numerals designate like parts, and wherein:
- Fig. 1: shows the communication paths in a communication network comprising a peer node, a mobile host and a further node being able to perform bi-casting via a first and a second attachment node before a handover,
- Fig. 2: shows the communication paths in the communication network according to fig. 1 involving the further node in the communication between peer node and mobile host,
- Fig. 3: shows the communication paths in the communication network according to fig. 1 after the switch-over from a temporary connection to a direct connection between the peer node and the mobile host, and
- Fig. 4: shows an extended locater (attachment node) state machine of an attachment node of the communication network according to the invention.

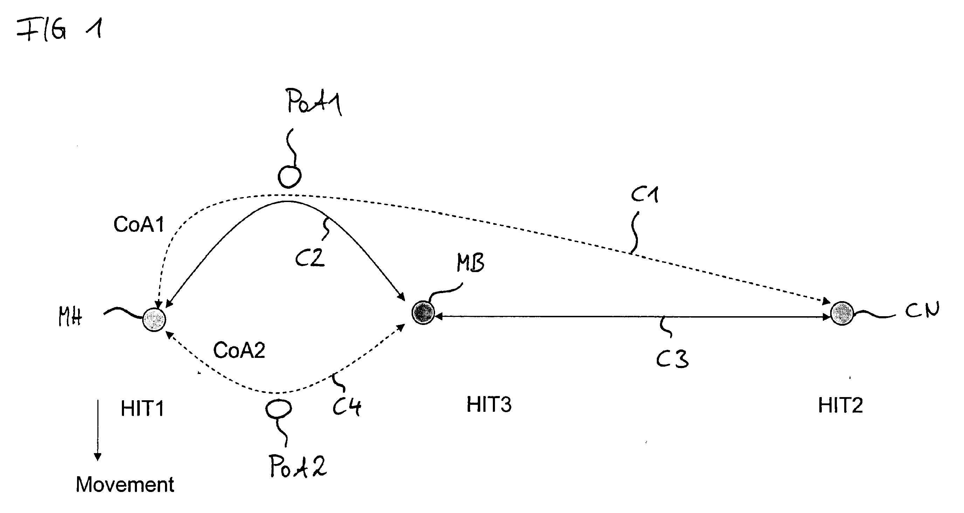

Figs. 1 to 3 show the communication process within a communication network according to the invention. The communication network comprises a peer node CN, a further node MB and a mobile host MH. The mobile host MH, the further node MB (which sometimes is referred to as middle box) and the peer node CN (which sometimes is referred to as corresponding node) are peer nodes of the communication network which are able to communicate using host identity protocol (HIP). Since the peer nodes of the communication network are able to use HIP each of the peer nodes MH, MB and CN has an identifier HIT1, HIT2 and HIT3 being different to each other. In the communication network furthermore locators or attachment nodes PoA1 and PoA2 are shown. To the attachment node PoA1 a care-of-address CoA1 is assigned. To the second attachment node PoA2 a second care-of-address CoA2 is assigned. The first and the second attachment nodes are peer nodes of the communication network as well.

As a starting point, it is assumed that the mobile host MH is connected to the peer node CN, based on a HIP connection via the first attachment node PoA1. The communication path would correspond to the direct connection between the mobile host MH and the peer node CN via the first attachment node PoA1.

It is further assumed, that the mobile host MH requires seamless handover support at some point in time. In a first step an agreement between the mobile host MH and the peer node CN to temporarily use a third party host identity has to be made. Hence, the mobile host indicates to the peer node CN that the further node MB with a different host identity tag (HIT2) should be temporarily used for some or all of the security associations used between mobile host MH and the peer node CN.

It is not necessary that the peer node CN has knowledge about the incident of seamless handover and required details. But if the peer node CN receives a request for using the further node it should use or has to use a different HIP connection for certain security associations. The basic agreement could be integrated into the HIP connection set up introducing new parameters for this purpose or alternatively different signalling mechanism could be used. The signalling mechanism could be based on the IETF NSIS protocol.

In a second step a temporary connection between the mobile host MH and the peer node CN with the further node has to be created. At a specific point in time the mobile host MH changes its location. Thereby, it detects the second point of attachment PoA2 within the communication network, which requires the change of the assigned care-of-address from CoA1 to CoA2. It is assumed, that the mobile host asks for a seamless handover support for the running HIP connection.

As a prerequisite the mobile host MH can already obtain the second care-of-address CoA2 in advance, even if a new link layer connection is not yet fully established. Furthermore, the mobile host MH has to detect a further node which is able to perform a communication which is called bi-casting based on HIP. For executing the method proposed it is not relevant whether the mobile host MH has a priori knowledge or needs to detect the further node and which mechanisms are used in the latter case. When detecting and contacting the further node to perform seamless handover it is crucial that the location towards a converging forwarding point in the network is as close as possible to the mobile host MH in order to minimize duplicated forwarding of data.

As a result of this procedure the mobile host MH creates a new HIP connection with the further node MB. During the connection set up the mobile host MH may indicate the further node MB that it should set up a HIP connection with the peer node CN and it should accept data which are destined for the mobile host. Therefore, the further node MB needs to decode the identity HIT1 of the mobile host MH which is encoded in the data sent to the further node MB. The mobile host MH may further indicate to further node MB that data destined for the mobile host MH should be bi-casted to the first care-of-address (which is the current care-of-address) and the second care-of-address (which is a new care-of-address). The mobile host MH may further indicate to further node MB to accept a preliminary care-of-address of the mobile host (the new care-of-address CoA2) which can not be reached immediately.

When the further node MB initiates a connection with the peer node CN it should use a mutual secret which has been already used for the secured connection between the mobile host MH and the peer node CN.

As indicated above, the further node MB being able to perform bi-casting needs to send data to the current, first care-of-address CoA1 and the new, second care-of-address CoA2 which becomes active after handover. Therefore, it is necessary and suggested to add the new, second care-of-address CoA2 in advance to a current HIP communication. This can be done in a similar way like a multi-homed host notifies about a new address to be used.

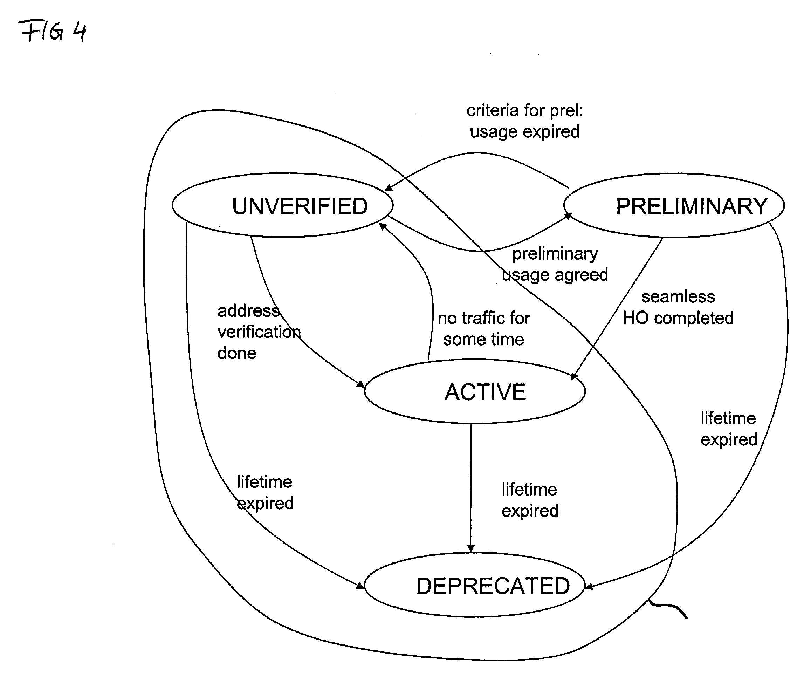

The following is an example how the HIP specification could be extended for this purpose. The new care-of-address is specified with the status "preliminary", which is a new state to be introduced. This is pointed out in fig. 4 which shows an extended locator state machine. To achieve this, the mobile host sends an UPDATE message and the transported LOCATOR parameter should indicate through a flag that a care-of-address is preliminary. When the further node receives the locator update message with the address status "preliminary" it implicitly knows that the new locator should be used immediately based on some given restrictions, such as the amount of data or time period for the unverified usage of the locator. Address verification usually is mandatory in a HIP communication for a new locator. However, to enable the immediate usage of the locator it is suggested that the verification procedure is postponed applying some additional criteria. The further node MB may accept the preliminary usage of the new address since there is already a HIP association based on the current care-of-address. Therefore, already some level of trust has been established between the peers. The delaying of the address verification is acceptable for the further node. Criteria for limitation of the new locator can be:
- Time period before the address verification can be initiated. This assumes that the mobile host MH has knowledge about the average time or the handover preparation. Based on this value some extra time is added to calculate a suggested value.
- The amount of data that can be sent towards the new locater before address verification is applied.

The mobile host can suggest the criteria and the value for limiting the address usage when informing the further node MB about a new locator. Furthermore, the further node MB acknowledges the usage of the new address for restricted usage and may update the suggested criteria and/or values for the restriction.

As noted above, the invention proposes to extend the locator state machine with the new state PRELIMINARY. As can be seen from fig. 4 states UNVERIFIED, ACTIVE and DEPRECATED have been already proposed within the known specification for HIP. Fig. 4 visualizes the extended state machine for the new state and state transitions, based on the existing states and state transitions. The already known states and state transitions as specified in T. Henderson, 'End-Host Mobility and Multihoming with the Host Identity Protocol', draft-ietf-hip-mm-03, February, 2006 are encompassed by the circle and will not be described within this specification.

UNVERIFIED indicates that the reachability of the address (care-of-address) has not been verified yet. ACTIVE indicates that the reachability of the address has been verified and the address has not been deprecated. DEPRECATED indicates that the locator life time has expired. The new state PRELIMINARY has been introduced to enable a non-verified address to be used before handover is completed. Even though an address may be used in state unverified to send a limited number of data, the introduced new state preliminary is necessary to ensure that the proposed method is compliant with the existing state machine, where the state unverified assumes that this address should not be used before verification is completed while this is different from the proposed seamless handover of the current invention. Furthermore, when the address is not used for some time, there should be no transition to the state preliminary again. This means that the preliminary locator is only used during seamless handover, while the state unverified may occur at any time.

Following the meanings of the new state transitions from PRELIMINARY to the existing states UNVERIFIED, ACTIVE and DEPRECATED are explained:
- UNVERIFIED to PRELIMINARY: The mobile host MH sends a locator update message with the locator type PRELIMINARY for an existing security association which is currently not used for the given locator. Thus, the further node MB recognizes that the mobile host MH wants to make use of this address before it is verified. Together with this request the criteria for restricted usage is sent to the further node MB. Once the further node MB agrees to the preliminary usage it changes the locator state to PRELIMINARY.
- PRELIMINARY to ACTIVE: The seamless handover has been completed and an address verification has been done.
- PRELIMINARY to UNVERIFIED: Once the criteria for preliminary usage of the locator are not fulfilled anymore the further node MB should change to locator state UNVERIFIED. This is the case, if the address is not used for a predefined time and/or the amount of data exchanged between the further node MB and the mobile host MH has exceeded a specified threshold.
- PRELIMINARY to DEPRECATED: The specified lifetime of the locator status has been exceeded. This state transition is independent from the criteria for constrained usage.

In case the further node MB does not agree to accept preliminary usage of the locator/care-of-address or does not accept the criteria for the constrained usage the state should be changed to unverified and the mobile host should be informed about this incident.

An example how to specify bi-casting is given in the following:

The current HIP draft specification suggests that when a host has multiple locators, the host must decide upon which to use for outbound data. It may be that a host would prefer to receive data on a particular inbound interface. HIP allows a particular locator to be designated as a preferred locator and communicated to the peer. Therefore, the preferred locator option can be extended for bi-casting. Thus, the mobile host indicates the preferred locator option for both the current and the new locator. In principle, other mechanisms could be used as well to indicate the bi-casting request, e.g. based on HIP NOTIFY messages or other out-of-band signalling.

As stated above, to enable seamless handover, bi-casting is required for inbound traffic towards the mobile host MH using the current (first) and the new (second and still restricted) locator. To switch over to the temporary connections and activate bi-casting at the same time, the mobile host MH needs to create a triggering message towards the peer node CN. The peer node CN starts sending data to the further node MB instead of sending them directly to the mobile host MH via the first attachment node PoA1. After having received data from the peer node CN the further node MB starts bi-casting the data via the first and the second attachment node PoA1, PoA2. Consequently, the direct HIP connection C1 between the peer node CN and the mobile host MH is split into two logical HIP connections. The first one is between the peer node CN and the further node MB and depicted with C3. The second one is between the further node MB and the mobile host MH and depicted with C2 and C4 respectively. Since a communication between MH and MB still is taking place via the attachment node PoA1 communication path C2 is active, whereas communication path C4 via the second attachment node PoA2 is inactive yet. For example the protocol specification could be extended to use a notify message as a triggering message to switch over to the temporary connection (via MB).

The peer node CN redirects data destined for the mobile host MH to the previously established connection (communication path C3, C2) with the further node MB. However, the host identity tag HIT1 of the mobile host MH needs to be encoded into data to enable the further node MB to de-multiplex the received information in case the further node MB maintains temporary connection with more than one mobile host.

Fig. 1 gives an example for the seamless handover situation prior to handover when the temporary HIP connections C3 and C2, C4, respectively, already have been established. The original connection (communication path C1) between the mobile host MH and the peer node CN is not used anymore. Bi-casting of data from the further node MB via two different security associations related to the first and the second care-of-addresses CoA1 and CoA2 has been initiated. Since the mobile host is still connected to the current (first) attachment node PoAl, the bi-casted data is received just by the mobile host via care-of-address 1 which is depicted with reference number C2.

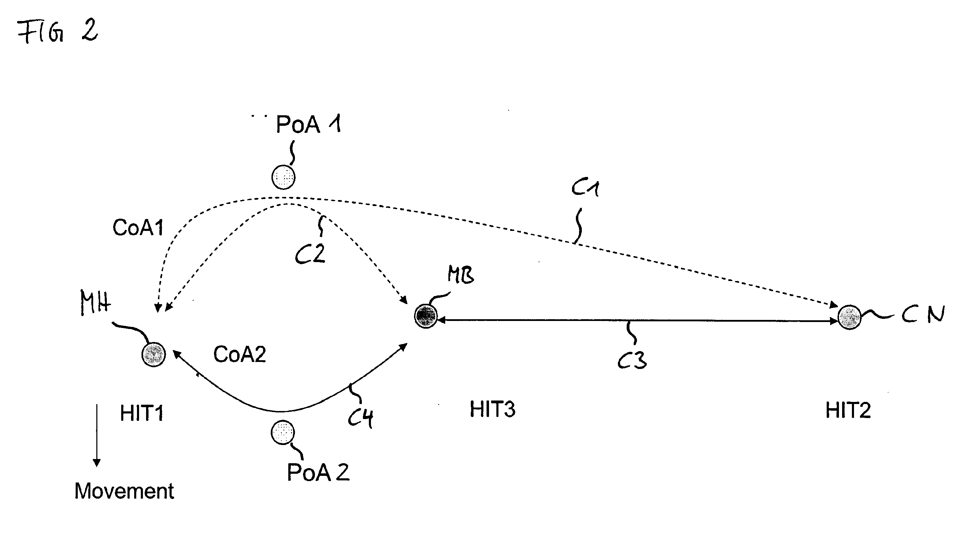

After the handover has been completed the situation is described as shown in fig. 2. Bi-casting of data by the further node MB is still active, but the mobile host MH receives data via the second attachment node PoA2 to which the second care-of-address CoA2 is assigned. Data via care-of-address 1 can not be delivered anymore. Subsequently, the mobile host can send a locator update message to the further node MB via the second attachment node PoA2 with a purpose to explicitly trigger the further node MB to perform address verification. This results in changing the locator state for the second care-of-address CoA2 from preliminary to active after the verification was successful.

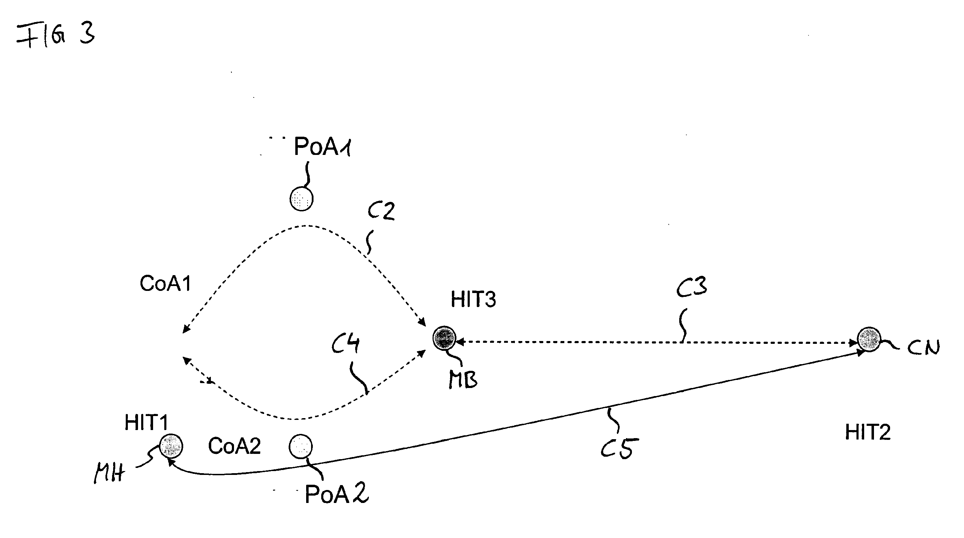

When handover from the first care-of-address CoA1 to the second care-of-address CoA2 is finished the mobile host MH may perform the following steps: Mobile host MH sends a locator update message indicating care-of-address CoA2 as the new locater to the peer node CN. The mobile host MH may inform the peer node CN to switch over to a direct HIP connection. This information is used to release the HIP connection between the peer node CN and the further node MB. After address verification is done by the peer node CN the switch over to the direct HIP connection between the mobile host MH and the peer node CN is completed. Consecutively, the mobile host MH may wish to keep the HIP connection with the further node MB for seamless handover procedures. Alternatively, it may terminate the connection. The situation after switching over from the temporary HIP connection to the directive connection is illustrated in fig. 3.

The method as described above requires extensions to the current HIP specification, i.e. apart from a basic implementation the mobile host MH needs implementation for informing a peer node of a third party host identity tag (HIT) to be used temporarily, and requesting bi-casting from a further node including preliminary usage of a new address. The further node MB needs implementation for support of bi-casting, acceptance of preliminary address usage, and acceptance and de-capsulation of packets destined for the mobile host from a node with third party host identity, i.e. the peer node CN. The peer node needs implementation for accepting temporarily usage of the third party node, i.e. the further node MB, for data destined to the mobile host MH, and encapsulating the host identity tag for the mobile host according to some specified syntax during temporary usage of third party connection.

According to a further embodiment the peer nodes can recognize whether they support extended HIP operations for seamless handover or not. For example, during the initial HIP connection setup the initiating host can indicate that it supports additional features. Support for extended operational mode can be coded as a part of the HIP version in the HIP header or in a HIP modified message. The peer node may respond with an ICMP error message, if this operational mode is not supported. Otherwise it may respond with a notify message itself. Alternatively, an out-of-band mechanism could be used to share such control information end-to-end between the peers like for example NSIS based signalling. Of course, a HIP peer node may support the extended operation based on the implementation but according to some policy may reject to provide such functionality for certain peer nodes.

In a further embodiment supporting of an interface towards the application to specify operational mode may be integrated. In this case, the application can inform the HIP module about the need for seamless handover. In that sense the HIP implementation may distinguish the needs for different applications and trigger bi-casting mechanisms only for specific security associations. The assumption is that there is an application programmer interface (API) to tell the HIP module about these requirements.

Another variant of the seamless handover approach for HIP is achieved by introducing a further node supporting bi-casting in a protocol independent manner. In this case, the mobile host MH sends information about a new locator (second attachment node to which the second care-of-address is assigned) to the further node and uses a dedicated out-of-band signalling mechanism. This may be not part of the mobility protocol, such as an application for NSIS. The further node caches the locator message and immediately starts bi-casting to the first care-of-address (the current address) and the new care-of-address (the second care-of-address). For identifying relevant inbound packets for bi-casting, the further node needs to match the cached locator information with the routing destination address.

With this approach the bi-casting mechanism is applied for all inbound packets destined for the first and the second care-of-address and is not built into the HIP protocol. This means that the further node duplicates matching inbound packets and replaces a destination address in the IP header from those packets that should be sent towards the first or second care-of-address. After the handover has been successfully finished the new care-of-address is sent to the peer node via a respective locator parameter in an HIP update message. The significant advantage of this approach is that the peer node CN is not involved in the seamless handover process and therefore a standard HIP compliant peer node is sufficient.

However, there are some considerable aspects related to this proposal. First, the identification of the supported mobile host is done on locators (care-of-addresses) while this has been given up by the HIP approach. In addition, the secure relationship introduced by the HIP protocol is compromised to some extend. Data integrity, which is one of the security paradigms, could be violated by a malicious node along the forwarding path.

## Claims

**1.** A method for providing seamless handover support for a mobile host (MH) in a communication network wherein a communication between the mobile host (MH) and a peer node (CN) is based on a Host Identity Protocol (HIP) connection and wherein an original connection between the mobile host (MH) and the peer node (CN) is established via a first attachment node (PoA1) to which a first care-of-address (CoA1) is assigned, thereby using at least one security association (SA), wherein:
- the mobile host (MH) indicates the peer node (CN) to use a further node (MB) having an identifier being different from an identifier of the mobile host (MH) for the at least one security association (SA) within a connection between the mobile host (MH) and the peer node (CN);
- a temporary connection between the mobile host (MH) and the peer node (CN) via the further node (MB) is established;
- the further node (MB) is informed about the first and a second care-of-address (CoA1, CoA2) which is assigned to a second attachment node (PoA2) and has been detected by the mobile host (MH), wherein the mobile host is still connected to the first care-of-address (CoAl);
- data from the peer node (CN) to the further node (MB) is sent which passes the data via the first and the second attachment nodes (PoA1, PoA2) to the mobile host (MH); and
- communication between the mobile host (MH) and the peer node (CN) is based on a HIP connection via the second attachment node (PoA2).

**2.** The method according to claim 1, wherein the step of establishing the temporary connection between the mobile host (MH) and the peer node (CN) comprises the steps of:
- setting up a HIP connection between the mobile host (MH) and the further node (MB);
- setting up a HIP connection between the further node (MB) and the peer node (CN).

**3.** The method according to claim 1 or 2, wherein the further node (MB) is using different security associations (SA) when bi-casting inbound packets to different attachment nodes (PoA1, PoA2) with different care-of-addresses (CoA1, CoA2).

**4.** The method according to one of the preceding claims, wherein
- an identifier of the mobile host (MH) is encoded by the peer node (CN) in data being destined for the mobile host, and
- the further node (MB) accepts data received from the peer node (CN) which are destined for the mobile host (MH).

**5.** The method according to claim 4, wherein the further node (MB) decodes the identifier of the mobile host (MH), received from the peer node (CN) to determine whether the data are destined for the mobile host (MH) or not.

**6.** The method according to one of the preceding claims, wherein the further node (MB) accepts preliminary usage of the second care-of-address (CoA2) as a recipient of data even if the second care-of-address (CoA2) has not been verified yet.

**7.** The method according to claim 6, wherein the preliminary usage of the second care-of-address (CoA2) is accepted based on the security association of the first care-of-address (CoA1).

**8.** The method according to claim 6 or 7, wherein the preliminary usage of the second care-of-address (CoA2) is accepted for a predetermined time period.

**9.** The method according to on of the claims 6 to 8, wherein the preliminary usage of the second care-of-address (CoA2) is accepted for a predetermined amount of data which can be sent towards the second care-of-address (CoA2) before address verification is applied.

**10.** The method according to one of the claims 6 to 9, wherein the further node (MB) acknowledges the usage of the second care-of-address (CoA2), especially for restricted usage.

**11.** The method according to one of the preceding claims, wherein the further node (MB) changes its state from preliminary to active after having completed handover thereby the second care-of-address (CoA2) becoming active.

**12.** The method according to one of the preceding claims, wherein a triggering message towards the peer node (CN) is created to cause it to switch over from the original connection to the temporary connections and to activate bi-casting of the further node (MB).

**12.** The method according to one of the preceding claims, wherein the original connection is released after switching over to the temporary connections or after having completed handover.

**13.** The method according to claim 12, wherein the mobile host (MH) performs the steps of sending an attachment node update message to the peer node (CN) with the second care-of-address (CoA2) as a new attachment node (PoA2) to the peer node when handover is completed.

**14.** The method according to claim 12 or 13, wherein the mobile host (MH) performs the steps of informing the peer node (CN) to switch over to a direct connection between the peer node (CN) and the mobile host (MH) via the second attachment node (PoA2) when handover is completed.

**15.** The method according to one of the claims 12 to 14, wherein the peer host (CN) performs the steps of performing an address verification of the second attachment node (POA2) when handover is completed.

**16.** The method according to one of the preceding claims, wherein the peer node (CN) and/or the mobile host (MH) and/or the further node (MB) can recognize whether they support HIP operations for seamless handover.

**17.** The method according to one of the preceding claims, wherein an application on a mobile host (MH) informs a peer node about the need for seamless handover.

**18.** The method according to one of the preceding claims, wherein the mobile host (MH) can obtain the second care-of-address (CoA2) in advance even if a new link layer is not yet fully established.

**19.** A network node for providing seamless handover support for a mobile host (MH) in a communication network wherein a communication between the mobile host (MH) and a peer node (CN) is based on a HIP connection and wherein an original connection between the mobile host (MH) and the peer node (CN) is established via a first attachment node (PoA1) to which a first care-of-address (CoA1) is assigned, thereby using at least one security association (SA), comprising an identifier being different from an identifier of the mobile host (MH) and being able to pass data received from the peer node (CN) and being destined for the mobile host (MH) via the first and a second attachment node (PoA1, PoA2) to the mobile host (MH).
